# FASCICULE DE BREVET EUROPEEN

(11) **EP 1 853 439 B1**
(45) Date de publication et mention de la délivrance du brevet: **27.08.2008**
(21) Numéro de dépôt: 06705358.7
(22) Date de dépôt: 24.02.2006
(51) Int. Cl.: B60C 27/06, B60C 27/14

(54) **DISPOSITIF ANTI-DÉRAPAGE POUR VÉHICULE**
FAHRZEUGANTIBLOCKIERSYSTEM
VEHICLE ANTISKID DEVICE

(30) Priorité: 01.03.2005 CH 350052005
(43) Date de publication de la demande: 14.11.2007
(73) Titulaire: Rothlisberger, Edouard-René, 1213 Petit Lancy (CH)
(72) Inventeur: Rothlisberger, Edouard-René, 1213 Petit Lancy (CH)
(86) Numéro de dépôt international: PCT/CH2006/000118
(87) Numéro de publication internationale: WO 2006/092075

(56) Documents cités:
- EP-A- 0 007 297
- WO-A-03/084771
- DE-A1- 2 553 342
- FR-A- 1 062 870
- FR-A- 2 450 166
- US-A- 5 044 415

## Description

L'invention a pour objet un dispositif anti-dérapage pour véhicule.

On connaît un grand nombre de dispositifs anti-dérapage destinés à être montés sur le pneu d'une roue de véhicule. Ces dispositifs sont généralement dénommés chaînes à neige, en général ces dispositifs sont satisfaisants du point de vue de l'amélioration de l'adhérence, mais ils présentent un grand défaut en ce qui concerne leur mise en place. En effet, il faut beaucoup de temps pour les installés sur les roues d'un véhicule, notamment sur les véhicules pour les transports publiques et sur les camions, ceci vu le poids des véhicules, car dans la plupart des cas les véhicules doivent être soulevés pour la mise en place.

Il est apparu des dispositifs pouvant être mis en place plus facilement. Le brevet américain US 5170827 décrit un exemple de ces nouveaux dispositifs. Dans ce document il est décrit une chaîne à neige comprenant une succession de chaînons articulés en matière plastique qui sont interconnectés entre eux, les deux extrémités libres de la chaîne étant reliées au moyen d'un organe de fermeture. La chaîne ainsi constituée est continue et les maillons sont réalisés de manière à être retenus contre la bande de roulement du pneu. Ils présentent une certaine élasticité et viennent se plaquer contre la bande de roulement et les flans dudit pneu. Lors du montage, il suffit de faire rouler le véhicule sur le dispositif, de sorte que celui-ci est retenu par les chaînons contre la bande de roulement du pneu avant d'être définitivement bloqué sur la roue au moyen d'un dispositif de fermeture permettant de rendre solidaire les deux chaînons placés aux extrémités libres de la chaîne. Ce dispositif présente une grande amélioration en ce qui concerne sa mise en place, par contre il n'est pas du tout satisfaisant au moment du mouvement du véhicule. En effet, avec la vitesse son maintien contre le pneu est insuffisant.
Dans le même ordre d'idée, le brevet français FR 2450166 décrit un dispositif basé sur le même principe présentant une amélioration du maintien du dispositif sur le pneu. Mais ce dispositif est compliqué et présente beaucoup de pièces délicates, qui dans les conditions dans lesquelles elles seront utilisées présenteront une rapide détérioration. De plus, si ledit dispositif présente des facilités pour sa mise en place, il présente des difficultés lors de son retrait.

un dispositif selon le préamule de la revendication 1 est décrit dans le document US-A-5044415.

L'invention a pour buts de fournir un dispositif anti-dérapage pour véhicule ne présentant pas les inconvénients des dispositifs connus cités ci-dessus, notamment un dispositif facile à mettre en place et à retirer, qui se tienne bien sur le pneu à grande vitesse, et qui soit résistant à l'usure.

Ces buts sont atteints avec un dispositif anti-dérapage pour véhicule selon l'invention défini à la revendication 1.

C'est après beaucoup de recherche que l'inventeur a compris comment améliorer la tenue du dispositif sur le pneu, ce qui fait la caractéristique de l'invention. En effet en disposant les axes des leviers destinés à enserrer le pneu sensiblement au-dessus de la bande roulement du pneu relativement au sol, le serrage du dispositif sur le pneu est beaucoup augmenté.

L'invention sera mieux comprise, ses avantages et ses caractéristiques apparaîtront plus clairement à la lecture de la description de formes d'exécution donnée uniquement à titre d'exemple, en regard des dessins sur lesquels :
La figure 1 est une vue de dessus d'une succession de maillons constituant une forme d'exécution du dispositif selon l'invention,
La figure 2 est vue de côté du dispositif de la figure 1,
La figure 3 est une coupe à travers un maillon selon la ligne III-III de la figure 1,
La figure 6 est une vue dessus d'une variante de l'élément de fermeture des figures 4 et 5,
La figure 7 est une vue de côté de l'élément de fermeture de la figure 6,
La figure 8 est une vue de côté d'une succession de maillons d'une variante du dispositif de la figure 1 présentant des chaînons porteur de leviers et des chaînons de liaison,
La figure 9 est une vue de côté d'une variante d'un levier porteur de leviers,
La figure 10 est une vue de côté et une vue de dessus d'un chaînon de liaison présentant un dispositif de blocage avec galets permettant d'adapter le maillon à différentes largeur de pneu,
La figure 11 est une variante du chaînon de la figure 3 présentant une pièce de blocage central de leviers,
La figure 12 est une vue semblable à la figure 1 d'une autre forme d'exécution du dispositif selon l'invention,
La figure 13 est une vue semblable de celle de la figure 2, de la forme d'exécution représentée à la figure 12,
La figure 14 est une vue de dessus d'un support 7' de la forme d'exécution représentée à la figure 12,
La figure 15 est une coupe à travers un maillon selon la ligne II-II de la forme d'exécution représentée à la figure 14 pour un pneu large,
La figure 16 est une coupe à travers un maillon selon la ligne II-II de la forme d'exécution représentée à la figure 14 pour un pneu étroit,
La figure 17 est une vue schématique de dessus d'une variante d'un élément de fermeture du dispositif,
La figure 18 est une coupe de l'élément représenté à la figure 17,
La figure 19 est un détail de l'élément représenté à la figure 17.

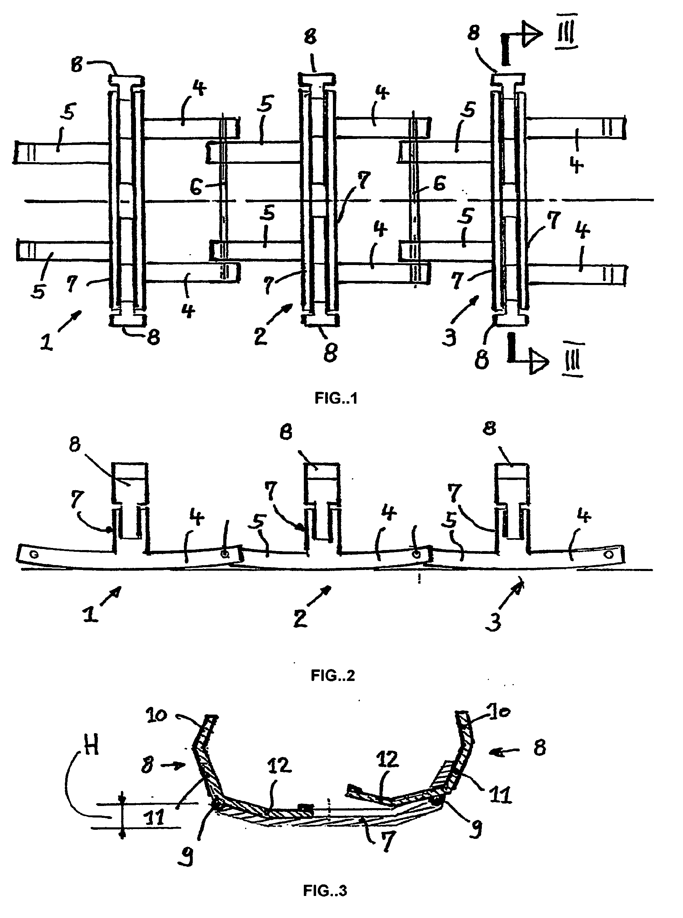

Le forme d'exécution du dispositif anti-dérapant pour véhicule représenté aux figures 1 est constitué de maillons 1, 2, 3 reliés entre eux par des brides de liaison 4 et 5 assemblées au moyen des axes de fixations 6. Chaque maillon 1, 2 ,3 comprend un support central 7 muni, à chacune de ses extrémités latérales d'un levier de serrage 8 pivotant sur un axe 9.

En examinant la figure 3, on remarque que les leviers 8 ont sensiblement la forme d'un L majuscule comprenant une branche approximativement verticale présentant deux parties 10 et 11 formant un angle destiné à enserrer le flan du pneu. L'extrémité 10 de la partie verticale du levier 8 vient se positionner à proximité de la jante, de manière à emprisonner et à entourer la partie renflée du flan du pneu. La branche sensiblement horizontale 12 du L s'étend sous la bande de roulement du pneu et comme représenté à la figure 3, le propre poids du véhicule, agissant sur la bande de roulement du pneu amène les deux leviers 8 à venir se serrer contre le flan du pneu en tournant autour des axes 9. Comme les axes 9 sont disposés à la hauteur H (voir fig. 3) relativement au-dessus de la bande de roulement du pneu par rapport au sol, les branches 12 ont une légère inclinaison vers la bande de roulement du pneu, ce qui garantit un bon serrage du pneu. La hauteur H peu être comprise entre 3 et 10 cm suivant la forme d'exécution.

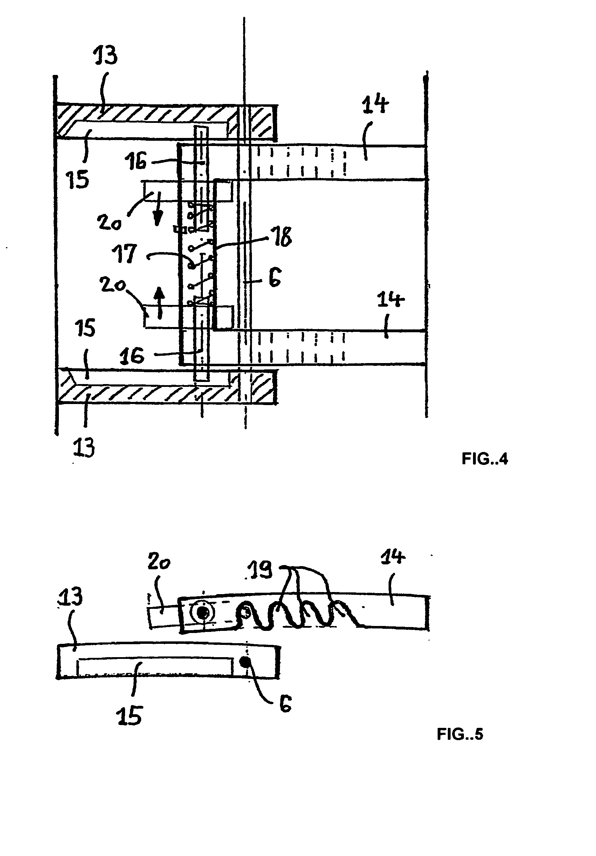

Pour disposer le dispositif il suffit dès lors que le véhicule roule sur ledit dispositif posé par terre, devant la roue du véhicule. Le poids du véhicule en appuyant sur les branches 12 des leviers 8 amène les maillons 1 à se refermer sur le pneu, et génère ainsi une liaison efficace entre le dispositif anti-dérapant et le pneu. Il suffira, lors de la mise en place du dispositif, de refermer un élément de fermeture représenté dans les figures 4 à 7 pour fixer définitivement le dispositif à la roue du véhicule.

L'élément de fermeture représenté dans les figures 4 et 5 est extrêmement simple et est réalisé à partir des brides de liaison 4 et 5 des maillons 1, 2 ou 3. les brides 13 qui représentent une variante des brides 4 des figures 1 à 3 présentent une rainure intérieure complémentaire 15 destinée à recevoir les tenons 16 montés contre l'action du ressort 17 dans la partie 18 solidaire des deux brides 14 du support central 7 du maillon 1, 2. La partie inférieure des brides 14 présente une denture 19, destinée à venir se placer sur l'axe fixe 6 reliant les deux brides de liaison 13. Comme représenté dans la figure 5 la denture 19 vient se positionner sur l'axe fixe 6 et les tenons 16 sont pressés l'un contre l'autre contre l'action du ressort 17 par l'utilisateur au moyen des deux poussoirs 20 reliés au tenon 16.

Lors de la mise en place finale du dispositif anti-dérapage après que ledit dispositif a été enroulé sur le pneu lors de l'avance du véhicule, la bride de liaison 14 pivote avec son maillon et est amenée au contact de la bride 13. lors de ce contact la denture 19 de la bride de liaison 14 vient se positionner sur l'axe fixe 6 et les tenons 16 sont pressés contre l'action du ressort 17 de manière à pouvoir être introduits dans les rainures 14 de la bride 13. Lorsque l'élément de fermeture, représenté figures 4 et 5, est en place, il suffit au moment où l'on veut retirer le dispositif anti-dérapage de presser les poussoirs 20 vers l'intérieur pour dégager la bride de liaison 14 et le maillon correspondant.

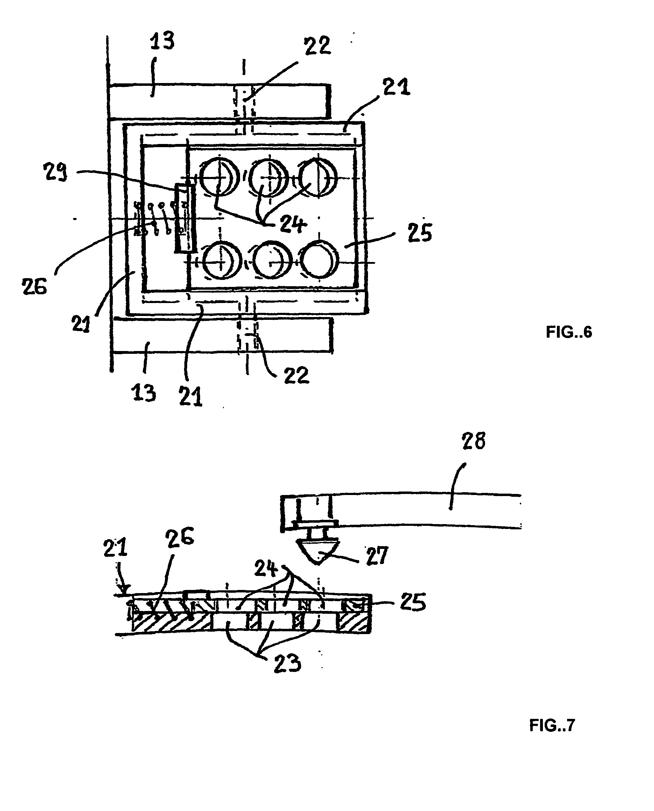

Dans la variante de l'élément de fermeture des figures 6 et 7, les brides de liaison 13 reliées au support d'un maillon d'extrémité représenté dans les figures1 à 3 supporte un cadre 21. La liaison, entre le cadre 21 et les brides 13, est faite au moyen d'un axe 22. Le cadre présente une série d'ouverture circulaire 23 correspondant à un série d'ouverture similaires 24 pratiquées dans une plaquette coulissante 25, la plaque coulissante 25 se déplace contre l'action d'un ressort 26 et est dans la position de repos légèrement décalée, de sorte que les orifices 23 et 24 présentent également un décalage d'environ un quart de la longueur du diamètre des orifices correspondants 23 et 24. Ce décalage permet d'amener deux tenons 27 placés à l'extrémité des brides de liaison 28 correspondant à la bride 5 d'un maillon d'extrémité. Les tenons 27 sont appliqués contre deux orifices 24 et engagés par friction dans le cadre 21. La plaque coulissante 25 laisse passer les tenons 27 pour se refermer ensuite sur eux, grâce à l'action du ressort 26. Le dispositif de fermeture est ainsi bloqué. Pour ouvrir l'élément de fermeture représenté dans les figures 6 et 7 il suffit d'appliquer une pression sur le poussoir 29 pour ramener contre l'action du ressort 26 la plaque coulissante 25 dans une position où les orifices 23 et 24 correspondent exactement, de manière à libérer les tenons 27.

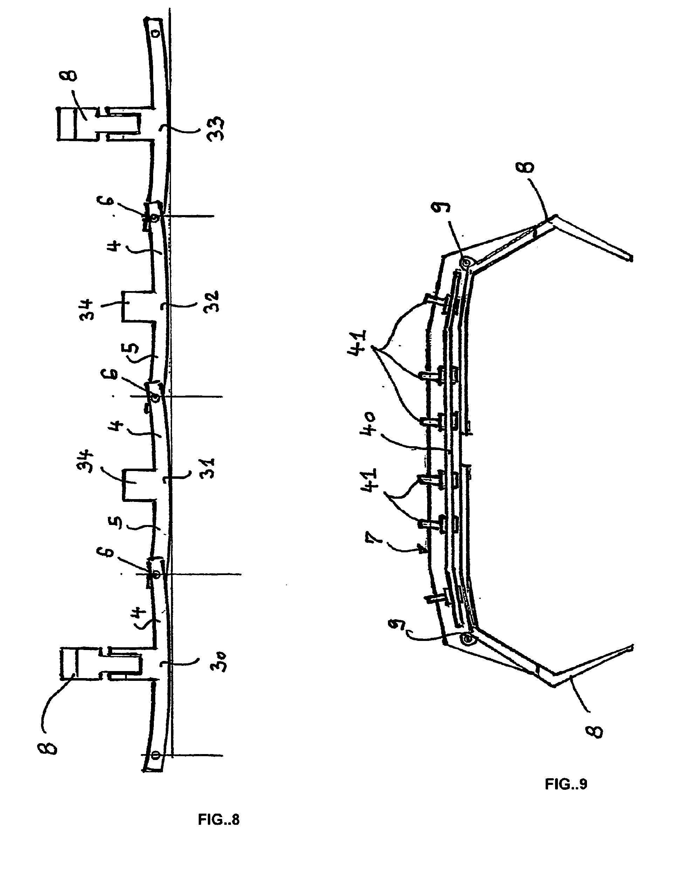

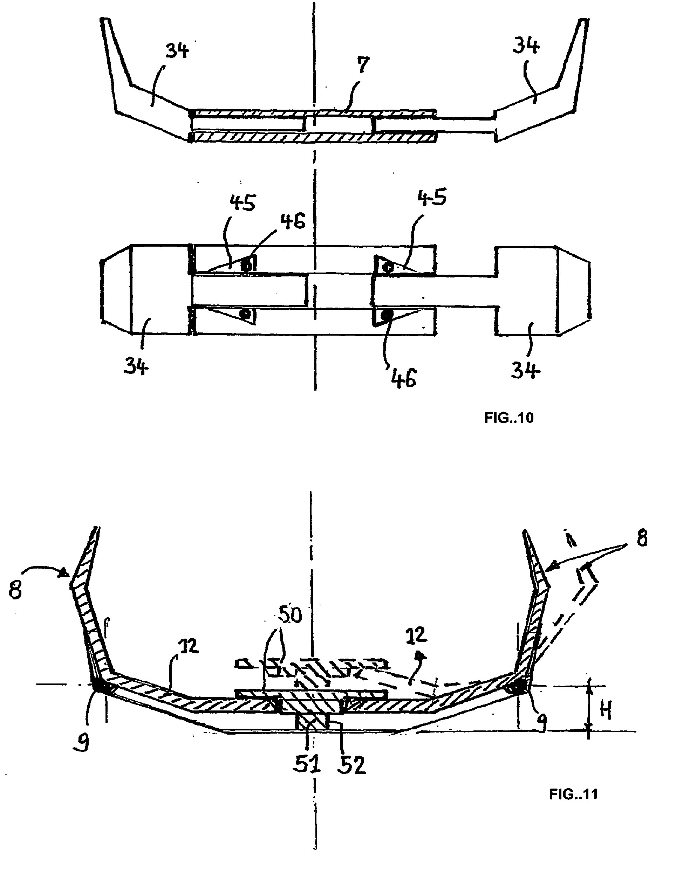

Dans la figure 8 est représenté une succession de maillon 30, 31, 32 et 33 reliés par des brides de liaison 4 et 5 au moyen des axes 6. Les maillons 30 et 33 sont des maillons semblables à ceux qui ont été décrits en regard des figures 1 à 3 avec les leviers pivotants 8, alors que les maillons 31 et 32 sont des maillons de liaison présentant une simple patte latérale 34 destinée à maintenir le maillon contre la bande roulement du pneu sans exercer une action de serrage dudit pneu. Le dispositif anti-dérapage qui vient d'être décrit peut donc présenter quelques maillons de serrage destinés à maintenir le dispositif sur le pneu, des maillons de liaison étant intercalés entre les maillons de serrage 1, 2, 3, 30, 33. Les maillons de liaison seront représentés en détail dans la figure 10 représentant une vue de dessus et une vue de côté dudit maillon muni d'un dispositif de blocage permettant d'adapter le support central à différentes largeur de pneu.

Dans la figure 9 est représentée une variante du maillon de serrage 1, 2, 3, 30, ou 33 avec le support central 7 et les leviers latéraux de serrage 8 pivotant autour des axes 9, disposées à une hauteur H relativement au-dessus de la bande de roulement du pneu par rapport au sol. Dans la variante représentée dans la figure 9 le support central 7 est réalisé en matière composite injectée et présente dans sa masse une armature en acier 40 munie de clous 41 rivés ou soudés sur l'armature 40. Les leviers de serrage peuvent également être réalisés en matière synthétique armée de fibres de carbone ou de fibres de verre, ou en métal léger.
D'autre part, les clous 41 peuvent être en acier trempé et être munis d'une poudre de diamant de manière à présenter une dureté maximum.

Dans la figure 10, qui représente une vue de dessus et une vue de côté du chaînon de liaison 31 ou 32, le support central 7 comprend les pattes latérales 34 qui coulissent à l'intérieur dudit support central muni lui-même d'un dispositif de blocage formé par un fraisage en queue d'aronde 45 à l'intérieur duquel sont placés des galets cylindriques 46 permettant le blocage dans une position donnée des pattes latérales 34, de manière à adapter le support central 7 à différentes largeurs de pneu.

Le réglage des maillons de liaison ne pose aucun problème, étant entendu qu'il suffit d'appliquer les pattes latérales 34 contre le pneu de manière à enclencher l'action de blocage des galets 46. Les maillons de liaison resteront dans la position bloquée pendant le fonctionnement du dispositif et la dépose du dispositif anti-dérapage ne posera aucun problème étant entendu que le chaînon de liaison 31, 32 n'enserre pas le pneu et peut donc par conséquent être retiré du pneu sans friction.
Par contre le réglage des maillons de serrage représenté dans les figures 1 à 3 peut poser certains problèmes si l'on veut l'adapter à plusieurs grandeurs de pneu. Il est évident pour l'homme du métier qu'un maillon d'une dimension déterminée peut être utilisé pour deux ou trois largeurs de pneu proches l'une de l'autre, car le battement des leviers de serrage 8 laisse un certain jeu. Cependant, il est évident que le maillon de serrage ne peut pas équiper un grand nombre de dimensions de pneu et il sera nécessaire de prévoir des maillons de serrage de différentes largeurs.

Le maillon représenté dans la figure 11 est une variante du maillon représenté dans les figures 3 ou 9. Il comprend le support central 7 avec les deux leviers 8 pivotant autour des axes 9 placés à l'extrémité du support central 7 à une hauteur H au-dessus de la bande de roulement du pneu relativement au sol. La hauteur H dans ce cas peut être comprise entre 3 et 5 cm. Les branches inférieures 12 des leviers sont reliées par une pièce de blocage 50 venant s'appuyer aux extrémités des branches 12 de manière à servir de support central à la bande de roulement du pneu. La pièce de blocage 50 présente une tige 51 coulissant dans un alésage 52 du support central 7.Ainsi une pression exercée par la bande de roulement du pneu sera transmise en même temps aux deux leviers de manière à effectuer un blocage symétrique.

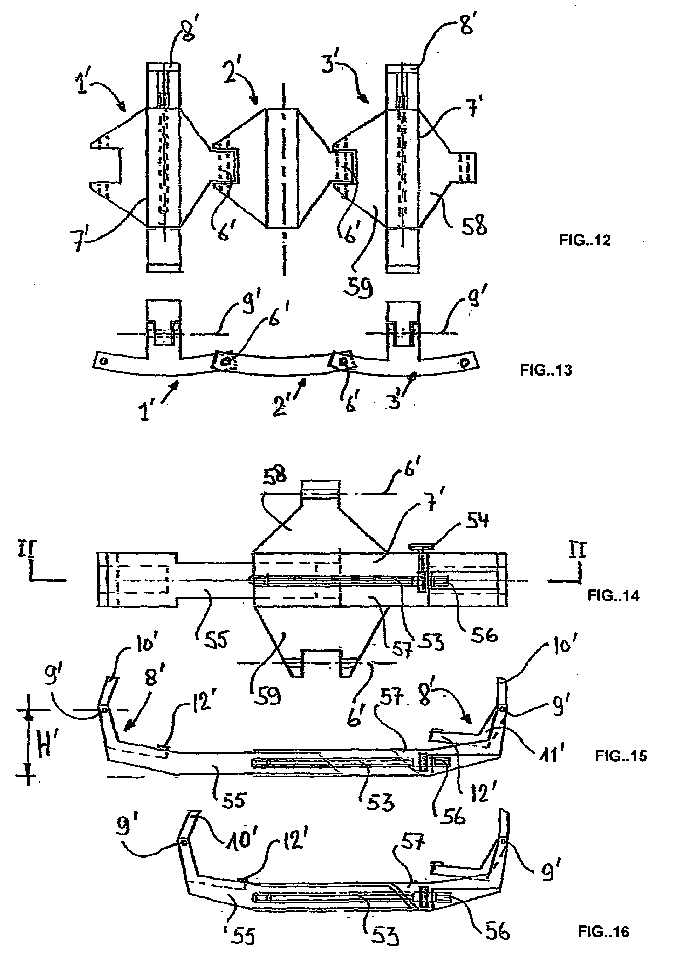

Dans les figures 12 à 16 il a été représenté une variante de la forme d'exécution du dispositif anti-dérapage décrite en regard des figures 1 à 3. Afin de faciliter la comparaison les mêmes organes ont été désignés avec les mêmes signes de référence marqués d'un prime.

Le dispositif anti-dérapage représenté dans les figures 12 et 13 comporte plusieurs maillons, dont trois ont été représentés 1', 2', 3'. Les maillons 1' et 3' sont identiques, tandis que le maillon 2' dénommé par la suite maillon de liaison est différent, en ce sens qu'il ne présente pas de moyen de retenue latéral destiné à enserrer le pneu. Dans les figures 14, 15 et 16 il a été représenté un maillon du type 1' de la forme d'exécution représentée dans les figures 12 et 13. La figure 14 représente ledit maillon vu de dessus, tandis que les figures 15 et 16 montrent une coupe selon la ligne II-II de la figure 14 dans deux positions différentes. Une première fois pour des pneus larges, figure 15, et une seconde fois pour des pneus étroits, figure 16 Le maillon 1' présente-un support central 7 en forme de U anguleux dont les branches montantes sont sensiblement plus courtes que la branche inférieure. Les extrémités des branches montantes dudit U sont munies d'axes 9', disposés à une hauteur H relativement au-dessus de la bande de roulement du pneu par rapport au sol, sur lesquels sont montés pivotant des leviers 8' en forme de L. Les axes 9' sont disposés sur les leviers 8' sur la branche verticale au-dessus de la jonction des deux branches dudit L. Cette disposition permet aux branches horizontales 12' des leviers en forme de L de prendre une position inclinée relativement à l'horizontal, ce qui assure un meilleur serrage du pneu au niveau des extrémités supérieures 10' des leviers 8'. Les leviers 8' représentés sur les figures 14 et 15 sont représentés dans deux positions différentes à gauche et à droite sur lesdites figures. En effet, sur la partie droite des figures ils sont représentés dans la position prête pour recevoir un pneu, tandis que sur la partie gauche ils sont représentés en position de serrage sur un pneu.

Le support 7' est constitué de deux parties 55 et 57 télescopiques reliées par une vis 53, ayant une tête 56, et un moyen de blocage de position 54. Ces dispositions sont destinées à permettre le réglage de la largeur du support à la largeur du pneu à enserrer, et de les bloquer dans une position déterminée. Le support 7' présente latéralement deux plaques 58 et 59 en forme de trapèze comportant des perçages pour les axes 6' permettant de relier à d'autres supports pour former une chaîne (voir figure 12).

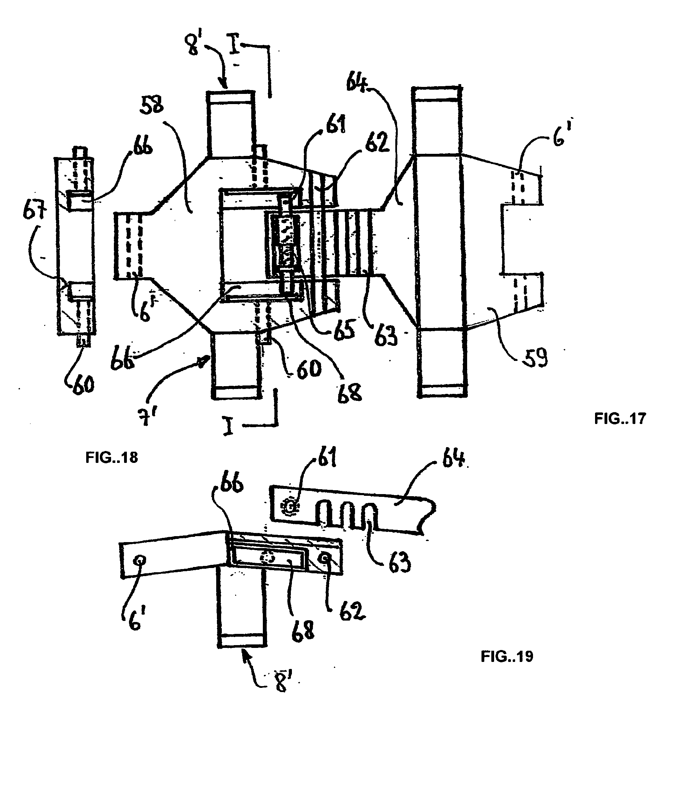

L'élément de fermeture représenté dans les figures 17, 18 et 19 est une variante de l'élément représenté dans les figures 4 et 5 pour la forme d'exécution du dispositif représenté dans les figures 12 et 13. Le support 7' disposé à une des extrémité de la chaîne présente une partie 58 semblable à toutes les autres parties 58 des autres éléments de la chaîne auxquels il est raccordé par l'axe 6', par contre sa partie 59 est modifiée. Elle comporte une ouverture dans laquelle est disposé un axe 62 et des rainures 66 contenant chacune une plaque 68 pouvant être déplacée par des poussoirs 60 Le support disposé à l'autre extrémité de la chaîne constituant un dispositif selon l'invention comporte un élément 64 correspondant aux éléments 58 des autres supports. L'élément 64 est sensiblement plus long que les autres éléments 58 est présente à son extrémité deux tenons pouvant se déplacer transversalement contre l'action d'un ressort 65. La fermeture du dispositif se fait simplement en engageant la partie 64 dans l'ouverture de la partie 59 de l'élément disposé à l'autre extrémité de la chaîne constituant ledit dispositif. Les tenons 61 sont alors repoussés sensiblement plus long que les autres éléments 58 est présente à son extrémité deux tenons pouvant se déplacer transversalement contre l'action d'un ressort 65.
La fermeture du dispositif se fait simplement en engageant la partie 64 dans l'ouverture de la partie 59 de l'élément disposé à l'autre extrémité de la chaîne constituant ledit dispositif. Les tenons 61 sont alors repoussés dans la partie 64 par des biais 67 prévu sur les bords de l'ouverture est se disposent dans les rainures 66, tandis que l'axe 62 vient se prendre dans une rainure 63 prévue sur la partie 64. Les tenons 61 ne servent qu'à maintenir en place la partie 64, l'effort de traction étant repris par l'axe 62. L'ouverture de l'élément de fermeture se fait simplement en appuyant sur les poussoirs 60 et en soulevant l'élément 64.

Le dispositif anti-dérapage selon l'invention pourra être réalisé en acier, en alliage de métal léger, en matière synthétique, par exemple en matière composite injectée armée de fibres de verre et/ou de carbone. D'autre part les maillons et les pièces de fermeture peuvent présenter des stries, des rainures ou des pièces rapportées pour renforcer le caractère anti-dérapant du dispositif. Finalement , les maillons peuvent être munis de clous.

## Revendications

1. Dispositif anti-dérapage pour véhicule comprenant une succession de maillons articulés destinés à venir s'enrouler sur un pneu d'une roue du véhicule, de manière à former un entourage anti-dérapant à la périphérie du pneu, au moins une partie des maillons (1, 2, 3 ; 30, 33 ; 1', 2' 3' ;) présentant un support central oblong (7, 7') destiné à venir en contact avec le sol et deux leviers latéraux (8, 8') articulés sur les deux extrémités dudit support central, de manière à venir enfermer et s'appuyer contre les flans et la bande de roulement du pneu sous l'action du poids propre du véhicule, lesdits leviers ont sensiblement la forme d'un L, présentant deux branches (11, 12 ; 11', 12') respectivement verticale (11,11') et horizontale (12, 12') **caractérisé en ce que** les axes (9, 9') de leurs articulations sont disposés à une certaine hauteur (H, H') sensiblement au dessus de la bande de roulement du pneu relativement au sol.

2. Dispositif selon la revendication 1, **caractérisé en ce que** les extrémités supérieures (10, 10') des branches (11, 11') desdits leviers en forme de L sont agencées pour venir se positionner contre le flan du pneu, au dessus de sa partie renflée.

3. Dispositif selon l'une des revendications 1 et 2, **caractérisé en ce que** les axes (9) de rotation des leviers (8) en forme de L sont disposés à la jonction des deux branches dudit L.

4. Dispositif selon l'une des revendications 1 et 2, **caractérisé en ce que** les axes (9') de rotation des leviers (8') en forme de L sont disposés au-dessus de la jonction des deux branches dudit L sur la branche verticale (11') dudit L.

5. Dispositif selon l'une des revendications 1 à 4, **caractérisé en ce que** les maillons (31, 32) non destinés à enfermer la courbure du pneu et formant des chaînons de liaison présentent des pattes latérales (34) maintenant le dispositif sur le pneu.

6. Dispositif selon l'une des revendications 1 à 5, **caractérisé en ce que** les maillons (1, 2, 3 ; 1', 2' 3') sont de forme arrondie, de manière à épouser la courbure du pneu.

7. Dispositif selon l'une des revendications 1 à 6, **caractérisé en ce que** la base inférieure du support central des maillons (1, 2, 3) comprend un dispositif de blocage (45, 46, fig. 10) munis de galets cylindriques (41) permettant de faire coulisser et de bloquer latéralement les branches latérales (34) ou les pattes des maillons dans le support central (7), de manière à adapter les maillons à différentes largeurs de pneu.

8. Dispositif selon l'une des revendications 1 à 6, **caractérisé en ce que** la base inférieure des maillons (1', 2', 3') comprend un dispositif à vis permettant de faire coulisser et de bloquer latéralement les branches latérales (34') ou les pattes des maillons dans le support central (7'), de manière à adapter les maillons à différentes largeurs de pneu.

9. Dispositif selon l'une des revendications 1 à 8, **caractérisé en ce qu'**il comprend, disposé entre deux chaînons, un élément permettant d'ouvrir et fermer la chaîne constituée par l'ensemble des maillons, ledit élément présentant des moyens de blocage réalisé sous forme de tenons d'encliquetage ou de denture permettant de recevoir un axe régulièrement espacé sur une longueur d'un maillon ou des ouvertures correspondant à la forme des tenons de manière à pouvoir adapter la longueur du dispositif à la circonférence du pneu.

10. Dispositif selon la revendication 9, **caractérisé en ce que** ledit élément présente des moyens de blocage réalisés contre l'action d'un ressort permettant ainsi une fermeture et une ouverture rapide et facile du dispositif.

11. Dispositif selon l'une des revendications 1 à 10, **caractérisé en ce qu'**il est réalisé en acier, en alliage d'aluminium, en matière synthétique renforcée par des fibre de verre et/ou de carbone.

12. Dispositif selon l'une des revendications 1 à 6, **caractérisé en ce que** les maillons sont en matériau composite, les axes et l'élément de fermeture étant réalisé en métal.

## Claims

1. Anti-skidding device for vehicles consisting of a row of joined links designed to enclose the tyre, thus creating, at the periphery of the tyre, an anti-skid frame, at least part of whose links (1, 2, 3; 30, 33; 1', 2', 3') form an oblong central support (7, 7'), intended to touch the ground as well as two lateral levers (8, 8') that are joined to the extremities of said support, thus by the vehicle's own weight to clasp around the side and bearing surface of the tyre. These levers are distinctly L-shaped and consist of two arms (11, 12; 11', 12') one vertical (11, 11') and one horizontal respectively (12, 12'), **characterised by** that the axes (9, 9') of their joints are at a certain height (H, H') noticeably above the bearing surface of the tyre (relative to the ground).

2. Device according to Claim 1, **characterised by** that the top extremities (10, 10') of the arms (11, 11') of aforementioned L-shaped lever have been designed in such a way that they place themselves at the side of the tyre, above its inflated part.

3. Device according to Claim 1 or 2, **characterised by** that L-shaped lever(8)'s axis of rotation (9) is arranged on the junction of the two arms of aforementioned L.

4. Device according to Claim 1 or 2, **characterised by** that the L-shaped lever(8')'s axis of rotation (9') is arranged above the junction of the two arms of aforementioned L, on the vertical arm of said L.

5. Device according to one of Claims 1 to 4, **characterised by** that the links (31, 32) not intended to enclose the curvature of the tyre and masking up connectional chain links form lateral hooks (34), attaching the device to the tyre.

6. Device according to one of Claims 1 to 5 **characterised by** that the links (1, 2, 3; 1', 2', 3') are of round shape; thus corresponding to the curvature of the tyre.

7. Device according to one of Claims 1 to 6, **characterised by** that the lower base of the links' (1, 2, 3) central support comprises a locking device (45, 46, Abb. 10) provided with cylinder-shaped rollers (41), that allows a lateral sliding or blocking of the lateral arms (34), or hooks of the links in the central support (7), thus adapting the links to differently sized tyres.

8. Device according to one of Claims 1 to 6, **characterised by** that the lower base of the links (1', 2', 3') is provided with a screw device, that allows a lateral sliding or blocking of the lateral arms (34'), or hooks of the links in the central support (7'), thus adapting the links to differently sized tyres.

9. Device according to one of Claims 1 to 8, **characterised by** that it is provided with an element between two of the chain links that allows the opening and locking of the chain given by the whole of the links, and that said element is provided with a blocking mechanism in the form of snap tenons or cogging resulting in a regularly spaced axis, or openings, corresponding to the shape of the tenons, in order to adapt the length of the device to the tyre's circumference.

10. Device according to Claim 9, **characterised by** that aforementioned element is provided with a coil driven blocking mechanism, allowing a swift and easy opening and locking of the device.

11. Device according to one of Claims 1 to 10, **characterised by** that it is made of steel, aluminium alloy or a synthetic material reinforced with glass- and/or carbon fibre.

12. Device according to one of Claims 1 to 6, **characterised by** that the links are made of a composite material and the axes and locking elements are made of metal.

## Patentansprüche

1. Antischleudervorrichtung für Fahrzeuge, bestehend aus einer Reihe von ineinandergefügten Gliedern, die sich um den Reifen eines Rades legen und diesen umschliessen sollen, um so am Aussenbereich des Reifens eine schleudersichere Umfassung zu bilden, wobei mindestens ein Teil der Glieder (1, 2, 3; 30, 33; 1', 2', 3') in der Mitte eine längliche Auflage (7, 7') bilden, die mit dem Boden sowie zwei seitlichen Hebeln (8, 8') in Kontakt kommen sollen, die an den beiden EndAnspruchen der obengenannten mittleren Auflage angefügt ist, um sich durch das Eigengewicht des Fahrzeuges an die Seiten und Auflageflächen des Reifens zu legen und diese zu umschliessen. Diese Hebel haben eine deutliche L-Form und bestehen aus zwei Schenkeln (11, 12; 11', 12') einem vertikalen (11, 11') und einem horizontalen (12, 12'), die sich **dadurch kennzeichnen, dass** die Achsen (9, 9') ihrer Gelenke sich in einer bestimmten Höhe (H, H') befinden, die fühlbar über der Auflagefläche des Reifens (in Bezug auf den Boden) liegt.

2. Vorrichtung entsprechend Anspruch 1, **dadurch gekennzeichnet, dass** die oberen Enden (10, 10') der Schenkel (11, 11') der erwähnten L-förmigen Hebel so konzipiert wurden, dass sie sich an die Seite des Reifens, über dem aufblasbaren Teil, anlegen.

3. Vorrichtung entsprechend Anspruch 1 oder 2, **dadurch gekennzeichnet, dass** die Rotationsachsen (9) der Hebel (8) in L-Form an der Verbindungsstelle der beiden Schenkel des erwähnten L angeordnet sind.

4. Vorrichtung entsprechend Anspruch 1 oder 2, **dadurch gekennzeichnet, dass** die Rotationsachsen (9') der Hebel (8') in L-Form über der Verbindungsstelle der beiden Schenkel des erwähnten L und zwar auf dem vertikalen Schenkel des erwähnten L angeordnet sind.

5. Vorrichtung entsprechend einem der Ansprüche 1 bis 4, **dadurch gekennzeichnet, dass** die nicht für die Einschliessung der Krümmung des Reifens vorgesehenen Glieder (31, 32), und welche verbindende Kettenglieder formen, seitliche Haken (34) bilden, die die Vorrichtung am Reifen fixieren.

6. Vorrichtung entsprechend einem der Ansprüche 1 bis 5, **dadurch gekennzeichnet, dass** die Glieder (1, 2, 3; 1', 2', 3') eine runde Form haben, so dass sie der Krümmung des Reifens genau entsprechen.

7. Vorrichtung entsprechend einem der Ansprüche 1 bis 6, **dadurch gekennzeichnet, dass** die untere Basis der mittleren Auflage der Glieder (1, 2, 3) über eine mit zylindrischen Laufrollen (41) ausgestattete Blockierungsvorrichtung verfügt (45, 46, Abb. 10), die ermöglicht, die seitlichen Schenkel (34) oder die Haken der Glieder seitlich in der mittleren Auflage gleiten zu lassen oder zu blockieren, um die Glieder an verschiedene Reifengrössen anzupassen.

8. Vorrichtung entsprechend einem der Ansprüche 1 bis 6, **dadurch gekennzeichnet, dass** die untere Basis der Glieder (1', 2', 3') über eine Schraubvorrichtung verfügt, die ermöglicht, die seitlichen Schenkel (34') oder die Haken der Glieder seitlich in der mittleren Auflage (7') gleiten zu lassen oder zu blockieren, um die Glieder an verschiedene Reifengrössen anzupassen.

9. Vorrichtung entsprechend einem der Ansprüche 1 bis 8, **dadurch gekennzeichnet, dass** sie, zwischen zwei Kettengliedern, ein Element enthält, welches ermöglicht, die Kette, welche durch die Gesamtheit der Glieder gebildet wird, zu öffnen und zu schliessen, wobei erwähntes Element einen Blockierungsmechanismus in Form von Schnappzapfen oder Verzahnungen aufweist, was ermöglicht, eine Achse mit regelmässigen Abständen auf der Länge eines Gliedes zu bilden, oder Öffnungen, die der Form der Zapfen entsprechen, um die Länge der Vorrichtung an den Reifenumfang anzupassen.

10. Vorrichtung entsprechend Anspruch 9, **dadurch gekennzeichnet, dass** erwähntes Element über einen durch eine Feder ausgelösten Blockierungsmechanismus verfügt, was ein rasches und einfaches Öffnen und Schliessen der Vorrichtung erlaubt.

11. Vorrichtung entsprechend einem der Ansprüche 1 bis 10, **dadurch gekennzeichnet, dass** sie aus Stahl, Aluminiumlegierung oder einem synthetischen und durch Glas- und/oder Karbonfiber verstärkten Material gefertigt ist

12. Vorrichtung entsprechend einem der Ansprüche 1 bis 6, **dadurch gekennzeichnet, dass** die Glieder aus Kompositmaterial, die Achsen und Schliesselemente aus Metall gefertigt sind.
